(19) **Europäisches Patentamt / European Patent Office / Office européen des brevets**

(11) **EP 4 765 307 A1**

(12) **EUROPEAN PATENT APPLICATION**
published in accordance with Art. 153(4) EPC

(43) Date of publication:
**24.06.2026 Bulletin 2026/26**

(21) Application number: **24908222.3**

(22) Date of filing: **23.12.2024**

(51) International Patent Classification (IPC):
*H01M 10/42* $^{(2006.01)}$     *H01M 10/052* $^{(2010.01)}$
*H01M 10/0568* $^{(2010.01)}$     *H01M 10/0569* $^{(2010.01)}$

(52) Cooperative Patent Classification (CPC):
**H01M 10/052; H01M 10/0568; H01M 10/0569;
H01M 10/42; Y02E 60/10**

(86) International application number:
**PCT/KR2024/020977**

(87) International publication number:
**WO 2025/135940 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.12.2023 KR 20230190181**

(71) Applicant: **LG Energy Solution, Ltd.
Seoul 07335 (KR)**

(72) Inventors:
• **PARK, Ji Young
Daejeon 34122 (KR)**
• **SHIN, Won Kyung
Daejeon 34122 (KR)**
• **KIM, Jung Jin
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY AND METHOD FOR EVALUATING THERMAL SAFETY OF LITHIUM SECONDARY BATTERY**

(57)     The present invention relates to a lithium secondary battery, in which a relationship among a size of the secondary battery, an amount of remaining ethylene carbonate, and a reaction area of a negative electrode satisfies a specific condition to improve safety when high heat is applied from an external heat source, and a method of evaluating thermal safety of a lithium secondary battery which may evaluate thermal safety of a cylindrical type lithium secondary battery through the above information.

**Description**

**TECHNICAL FIELD**

The present invention relates to a lithium secondary battery and a method of evaluating thermal safety of a lithium secondary battery.

**BACKGROUND ART**

A lithium secondary battery is generally prepared by a method in which electrode active material slurries are applied onto a positive electrode collector and a negative electrode collector to prepare a positive electrode and a negative electrode, respectively, and, after the positive electrode and the negative electrode are stacked on both sides of a separator to form an electrode assembly having a predetermined shape, the electrode assembly is accommodated in a pouch and an electrolyte is injected.

Secondary batteries are classified into a pouch type, a can type, and the like, according to a material of a case for accommodating the electrode assembly. Among them, the pouch type secondary battery is prepared by a method of press working a flexible pouch film laminate to form a cup portion, accommodating the electrode assembly in the cup portion, injecting an electrolyte, and then sealing a sealing portion, and the can type secondary battery is prepared by a method of accommodating the electrode assembly in a can formed of a metallic material, injecting an electrolyte, and then assembling a top cap on an upper portion of the can to seal the can.

A 4680 cylindrical type secondary battery, which has emerged as a next-generation secondary battery among the can type secondary batteries, is a cylindrical type secondary battery with a diameter of 46 mm and a height of 80 mm, wherein it has an advantage of high energy density and output because the diameter and the height are increased in comparison to those of a conventional cylindrical type secondary battery, but since heat generation increases due to the high energy density and output, internal heat dissipation is not easy. As described above, as the increase of the diameter and height of the cylindrical type secondary battery increases an internal volume thereof, ensuring safety in high-temperature environments becomes a more important issue.

**DISCLOSURE OF THE INVENTION**

**TECHNICAL PROBLEM**

An aspect of the present invention provides a lithium secondary battery in which safety is ensured when high heat is applied from an external heat source.

Another aspect of the present invention provides a method of evaluating thermal safety of a lithium secondary battery which may evaluate whether safety of the lithium secondary battery is ensured when high heat is applied from an external heat source.

**TECHNICAL SOLUTION**

In order to solve the above-described task, the present invention provides a lithium secondary battery.

[1] The present invention provides a lithium secondary battery including: an electrode assembly including a positive electrode, a negative electrode, and a separator disposed between the positive electrode and the negative electrode; an electrolyte including ethylene carbonate as a solvent; and a cylindrical battery case accommodating the electrode assembly and the electrolyte, wherein the lithium secondary battery satisfies Equation 1:

$$[\text{Equation 1}] \quad \frac{R}{H} \times \frac{dEC}{AA \times LA \times RA \times BA} \times 100 \geq 5.00$$

In Equation 1, R is a diameter (mm) of the battery, H is a height (mm) of the battery, dEC is an amount (g) of the ethylene carbonate remaining in the lithium secondary battery after formation, AA is an area(cm$^2$) of the negative electrode, LA is a loading amount (g/cm$^2$) of the negative electrode, RA is a ratio of a negative electrode active material, and BA is Brunauer-Emmett-Teller (BET) specific surface area (m$^2$/g) of the negative electrode active material, wherein R is in a range of 45 to 47, and H is in a range of 78 to 130.

[2] The present invention provides the lithium secondary battery of [1] above, wherein R and H are a diameter and a height of a 4680 lithium secondary battery, a 4695 lithium secondary battery, a 46120 lithium secondary battery, or a 46125 lithium secondary battery, respectively.

[3] The present invention provides the lithium secondary battery of [1] or [2] above, wherein dEC is in a range of 2.0 to 10.0.

[4] The present invention provides the lithium secondary battery of at least one of [1] to [3] above, wherein AA is in a range of 2,800 to 2,900.

[5] The present invention provides the lithium secondary battery of at least one of [1] to [4] above, wherein LA is in a range of 0.1000 to 0.2000.

[6] The present invention provides the lithium secondary battery of at least one of [1] to [5] above, wherein RA is in a range of 0.80 to 0.99.

[7] The present invention provides the lithium secondary battery of at least one of [1] to [6] above, wherein BA is in a range of 0.01 to 100.

[8] The present invention provides the lithium secondary battery of at least one of [1] to [7] above, wherein the electrolyte further includes an organic solvent other than the ethylene carbonate, wherein the organic solvent includes at least one selected from the group consisting of an ester-based solvent, an ether-based solvent, a ketone-based solvent, an aromatic hydrocarbon-based solvent, a carbonate-based solvent other than the ethylene carbonate, an alcohol-based solvent, nitriles, amides, dioxolanes, and sulfolanes.

[9] The present invention provides the lithium secondary battery of at least one of [1] to [8] above, wherein the electrolyte further includes an electrolyte additive, wherein the electrolyte additive includes at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

[10] The present invention provides the lithium secondary battery of at least one of [1] to [9] above, wherein the positive electrode includes a positive electrode active material, wherein the positive electrode active material includes a lithium transition metal oxide containing 60 mol% or more of nickel (Ni) among total metals excluding lithium.

Also, in order to solve the other tasks, the present invention provides a method of evaluating thermal safety of a lithium secondary battery.

[11] The present invention provides a method of evaluating thermal safety of a cylindrical type lithium secondary battery which includes the steps of: (s1) measuring a diameter and a height of the lithium secondary battery; (s2) measuring an amount of ethylene carbonate (EC) remaining in the lithium secondary battery after formation; (s3) measuring a reaction area of a negative electrode active material layer of a negative electrode included in the lithium secondary battery; and (s4) determining that the lithium secondary battery has thermal safety when Equation 1 is satisfied:

$$[\text{Equation 1}] \quad \frac{R}{H} \times \frac{dEC}{AA \times LA \times RA \times BA} \times 100 \geq 5.00$$

In Equation 1, R is the diameter (mm) of the battery, H is the height (mm) of the battery, dEC is the amount (g) of the ethylene carbonate remaining in the lithium secondary battery after formation, AA is an area ($cm^2$) of the negative electrode, LA is a loading amount ($g/cm^2$) of the negative electrode, RA is a ratio of a negative electrode active material, BA is Brunauer-Emmett-Teller (BET) specific surface area ($m^2/g$) of the negative electrode active material, and the reaction area of the negative active material layer is calculated as $AA \times LA \times RA \times BA$, wherein R is in a range of 45 to 47, and H is in a range of 78 to 130.

[12] The present invention provides the method of [11] above, wherein R and H are a diameter and a height of a 4680 lithium secondary battery, a 4695 lithium secondary battery, a 46120 lithium secondary battery, or a 46125 lithium secondary battery, respectively.

## ADVANTAGEOUS EFFECTS

As in a lithium secondary battery according to the present invention, in a case in which a relationship among a size of the battery, an amount of ethylene carbonate remaining after formation, and a reaction area of a negative electrode satisfies a specific condition, safety may be improved when high heat is applied from an external heat source, and accordingly, a lithium secondary battery with improved thermal safety may be provided. Also, according to a method of evaluating thermal safety of a lithium secondary battery of the present invention, the thermal safety of the lithium secondary battery may be predicted and evaluated from the size of the battery, the amount of the ethylene carbonate remaining after formation, and the reaction area of the negative electrode.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present invention will be described in more detail.

A lithium secondary battery according to the present invention includes an electrode assembly including a positive electrode, a negative electrode, and a separator disposed between the positive electrode and the negative electrode; an electrolyte including ethylene carbonate as a solvent; and a cylindrical battery case accommodating the electrode assembly and the electrolyte, wherein the lithium secondary battery satisfies Equation 1 below.

$$[Equation\ 1]$$

$$\frac{R}{H} \times \frac{dEC}{AA \times LA \times RA \times BA} \times 100 \geq 5.00$$

In Equation 1, R is a diameter (mm) of the battery, H is a height (mm) of the battery, dEC is an amount (g) of the ethylene carbonate remaining in the lithium secondary battery after formation, AA is an area($cm^2$) of the negative electrode, LA is a loading amount($g/cm^2$) of the negative electrode, RA is a ratio of a negative electrode active material, and BA is Brunauer-Emmett-Teller (BET) specific surface area ($m^2/g$) of the negative electrode active material, wherein R is in a range of 45 to 47, and H is in a range of 78 to 130.

Recently, as the demand for high-capacity batteries, such as batteries for electric vehicles, increases, rated capacity of a secondary battery cell is increasing, and accordingly, size and weight of an electrode assembly have tended to increase. As the size and weight of the electrode assembly increase, there is an advantage of high energy density and output, but since heat generation increases due to the high energy density and output, internal heat dissipation is not easy, and accordingly, influence of heat transfer by an external heat source further affects thermal stability of the battery.

Factors affecting thermal stability and safety of a cylindrical type secondary battery with larger diameter and height than a conventional cylindrical type secondary battery may include internal space and electrolyte solution injection amount of the cylindrical type secondary battery, and may also include influence due to formation of a solid electrolyte interphase (SEI) layer caused by an electrolyte solution additive. Among the above factors, the influence of the SEI layer is greater than that of the electrolyte solution injection amount, and thus, a decrease in the SEI layer due to a decrease in absolute amount of the electrolyte solution additive rather than an increase in the internal space due to a decrease in the electrolyte solution injection amount further affects the thermal stability and safety of the secondary battery. Therefore, in order to sufficiently form the SEI layer for ensuring the thermal stability and safety of the 4680 cylindrical secondary battery, a certain amount or more of the electrolyte solution additive must be included in the cylindrical type secondary battery.

In the lithium secondary battery, an SEI layer is formed as Li ions diffused from the positive electrode during initial formation are deposited on a surface of the negative electrode. In a process of forming the SEI layer, since the electrolyte solution additive reacts first and then the ethylene carbonate (EC), as the electrolyte solution solvent, reacts, a degree of SEI layer formation may be confirmed by a degree of decomposition of the ethylene carbonate included in the lithium secondary battery. That is, based on the fact that sufficient formation of the SEI layer significantly affects the thermal stability and safety of the lithium secondary battery, whether or not the SEI layer is sufficiently formed in the lithium secondary battery is confirmed by confirming the degree of decomposition of the ethylene carbonate included in the lithium secondary battery in a formation process, and thus, the thermal stability and safety of the lithium secondary battery may be confirmed.

Since a size of the lithium secondary battery, an amount of the ethylene carbonate remaining in the lithium secondary battery after formation, and a reaction area of the negative electrode satisfy Equation 1 below, the lithium secondary battery according to the present invention includes a sufficiently formed SEI layer.

$$[Equation\ 1]$$

$$\frac{R}{H} \times \frac{dEC}{AA \times LA \times RA \times BA} \times 100 \geq 5.00$$

In Equation 1, R is a diameter (mm) of the battery, H is a height (mm) of the battery, dEC is the amount (g) of the ethylene carbonate remaining in the lithium secondary battery after formation, AA is an area (cm$^2$) of the negative electrode, LA is a loading amount (g/cm$^2$) of the negative electrode, RA is a ratio of a negative electrode active material, and BA is BET specific surface area (m$^2$/g) of the negative electrode active material. Also, AA×LA×RA×BA in Equation 1 refers to the reaction area of the negative electrode.

The lithium secondary battery satisfying Equation 1 is a lithium secondary battery after formation.

In an embodiment of the present invention, Equation 1 may specifically be represented by Equation 1-1 below, and may more specifically be represented by Equation 1-2 below.

[Equation 1-1]

$$20.00 \geq \frac{R}{H} \times \frac{dEC}{AA \times LA \times RA \times BA} \times 100 \geq 5.00$$

[Equation 1-2]

$$15.00 \geq \frac{R}{H} \times \frac{dEC}{AA \times LA \times RA \times BA} \times 100 \geq 5.00$$

In Equations 1-1 and 1-2, R is the diameter (mm) of the battery, H is the height (mm) of the battery, dEC is the amount (g) of the ethylene carbonate remaining in the lithium secondary battery after formation, AA is the area (cm$^2$) of the negative electrode, LA is the loading amount (g/cm$^2$) of the negative electrode, RA is the ratio of the negative electrode active material, and BA is the BET specific surface area (m$^2$/g) of the negative electrode active material.

Also, in an embodiment of the present invention, a value of Equation 1 may satisfy 5.00 to 10.00, the value of Equation 1 may specifically satisfy 5.00 to 8.00, and the value of Equation 1 may more specifically satisfy 5.00 to 6.00.

In a case in which the lithium secondary battery satisfies Equation 1-1, it may exhibit better battery performance and thermal safety, and in a case in which the lithium secondary battery satisfies Equation 1-2, it may exhibit even better battery performance and thermal safety.

In an embodiment of the present invention, R is the diameter (mm) of the battery, wherein it may be a diameter of the lithium secondary battery or a diameter of the cylindrical battery case. R may be in a range of 45 to 47, R may specifically be in a range of 45.5 to 46.5, and R may more specifically be 46.

Furthermore, in an embodiment of the present invention, H is the height (mm) of the battery, wherein it may be a height (length) of the lithium secondary battery or a height (length) of the cylindrical battery case. H may be in a range of 78 to 130, H may specifically be in a range of 79.0 to 126.0, 79.0 to 121.0, 79.0 to 82.0, 94.0 to 96.0, 119.0 to 121.0, or 124.0 to 126.0, and H may more specifically be in a range of 79.5 to 80.5, 94.5 to 95.5, 119.5 to 120.5, or 124.5 to 125.5.

R (the diameter of the battery) and H (the height of the battery) may be the diameter and the height which are measured from an outer surface of the lithium secondary battery or the cylindrical battery case.

Also, in an embodiment of the present invention, R (the diameter of the battery) and H (the height of the battery) may specifically represent a diameter and a height of a cylindrical type lithium secondary battery, and may more specifically represent a diameter and a height of a 4680 lithium secondary battery, a 4695 lithium secondary battery, a 46120 lithium secondary battery, or a 46125 lithium secondary battery.

In an embodiment of the present invention, dEC is the amount (g) of the remaining ethylene carbonate, wherein it represents the amount of the ethylene carbonate included in the lithium secondary battery. Also, it may refer to a weight (g) of the ethylene carbonate remaining after the formation of the lithium secondary battery in the electrolyte solution injected into the lithium secondary battery.

In an embodiment of the present invention, while the lithium secondary battery satisfies Equation 1, dEC may be in a range of 2.0 to 10.0, may specifically be in a range of 2.4 to 7.5, and may more specifically be in a range of 4.95 to 5.83.

In an embodiment of the present invention, AA is the area (cm$^2$) of the negative electrode, and may be a total area of one surface of the negative electrode included in the lithium secondary battery.

In an embodiment of the present invention, while the lithium secondary battery satisfies Equation 1, AA may be in a range of 2,800 to 2,900, may specifically be in a range of 2,820 to 2,880, and may more specifically be in a range of 2841.3 to 2855.3.

In an embodiment of the present invention, LA is the loading amount (g/cm$^2$) of the negative electrode, wherein it is available capacity of the negative electrode per unit area.

In an embodiment of the present invention, while the lithium secondary battery satisfies Equation 1, LA may be in a range of 0.1000 to 0.2000, may specifically be in a range of 0.1400 to 0.1600, and may more specifically be in a range of 0.1468 to 0.1512.

In an embodiment of the present invention, RA is the ratio of the negative electrode active material, wherein it represents a weight ratio of the negative electrode active material to a total weight of a negative electrode active material layer.

In an embodiment of the present invention, while the lithium secondary battery satisfies Equation 1, RA may be in a range of 0.80 to 0.99, may specifically be in a range of 0.82 to 0.99, and may more specifically be in a range of 0.84 to 0.99.

In an embodiment of the present invention, BA is a Brunauer-Emmett-Teller (BET) specific surface area ($m^2/g$) of the negative electrode active material, and the "BET specific surface area" is measured by a BET method, wherein, specifically, the BET specific surface area may be calculated from a nitrogen gas adsorption amount at a liquid nitrogen temperature (77K) using BELSORP-mino II by Bell Japan Inc.

In an embodiment of the present invention, while the lithium secondary battery satisfies Equation 1, BA may be in a range of 0.01 to 100, may specifically be in a range of 0.01 to 50, and may more specifically be in a range of 0.5 to 3.0.

A lithium secondary battery satisfying Equation 1 may exhibit excellent thermal stability and thermal safety because the SEI layer is sufficiently formed during initial formation.

In an embodiment of the present invention, the electrolyte may further include an organic solvent other than the ethylene carbonate while including the ethylene carbonate as a solvent.

The organic solvent may include at least one selected from the group consisting of an ester-based solvent, an ether-based solvent, a ketone-based solvent, an aromatic hydrocarbon-based solvent, a carbonate-based solvent other than the ethylene carbonate, an alcohol-based solvent, nitriles, amides, dioxolanes, and sulfolanes. Specifically, the ester-based solvent such as methyl acetate, ethyl acetate, γ-butyrolactone, and ε-caprolactone; the ether-based solvent such as dibutyl ether or tetrahydrofuran; the ketone-based solvent such as cyclohexanone; the aromatic hydrocarbon-based solvent such as benzene and fluorobenzene; the carbonate-based solvent such as dimethyl carbonate (DMC), diethyl carbonate (DEC), ethylmethyl carbonate (EMC), and propylene carbonate (PC); the alcohol-based solvent such as ethyl alcohol and isopropyl alcohol; the nitriles such as R-CN (where R is a linear, branched, or cyclic C2-C20 hydrocarbon group and may include a double-bond aromatic ring or ether bond); the amides such as dimethylformamide; the dioxolanes such as 1,3-dioxolane; or the sulfolanes may be used as the organic solvent. More specifically, the carbonate-based solvent may be used, and a solvent capable of forming a mixture of a cyclic carbonate having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

Also, in an embodiment of the present invention, the electrolyte may further include a known electrolyte additive in the non-aqueous electrolyte, if necessary, in order to prevent the occurrence of collapse of the negative electrode due to the decomposition of the non-aqueous electrolyte in a high power environment or to further improve low-temperature high rate discharge characteristics, high-temperature stability, overcharge prevention, and an effect of suppressing battery swelling at high temperature.

The electrolyte additive may be an additive for forming an SEI layer, and, for example, may be at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

In a case in which the electrolyte additive is included, since the electrolyte additive participates in the formation of the SEI layer while being decomposed earlier than the ethylene carbonate during the initial formation of the lithium secondary battery, it may improve thermal stability of the SEI layer by forming the more uniform and sufficient SEI layer.

The cyclic carbonate-based compound may be vinylene carbonate (VC) or vinyl ethylene carbonate.

The halogen-substituted carbonate-based compound may be fluoroethylene carbonate (FEC).

The sultone-based compound may be at least one compound selected from the group consisting of 1,3-propane sultone (PS),1,4-butane sultone, ethane sultone, 1,3-propene sultone (PRS), 1,4-butene sultone, and 1-methyl-1,3-propene sultone.

The sulfate-based compound may be ethylene sulfate (Esa), trimethylene sulfate (TMS), or methyl trimethylene sulfate (MTMS).

The phosphate-based compound may be at least one compound selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may be tetraphenylborate, lithium oxalyldifluoroborate (LiODFB), and lithium bis(oxalato)borate (LiB($C_2O_4$)$_2$, LiBOB).

The nitrile-based compound may be at least one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylene diamine, and the silane-based compound may be tetravinylsilane.

The lithium salt-based compound is a compound different from the lithium salt included in the non-aqueous electrolyte, wherein the lithium salt-based compound may be lithium difluorophosphate (LiDFP), $LiPO_2F_2$, or $LiBF_4$.

In an embodiment of the present invention, the electrolyte may include one selected from the group consisting of vinylene carbonate (VC), 1,3-propane sultone (PS), ethylene sulfate (Esa), and lithium difluorophosphate (LiDFP) as the electrolyte additive.

The electrolyte may also include a lithium salt.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress a reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

The positive electrode may include a positive electrode collector and a positive electrode active material layer disposed on the positive electrode collector.

In an embodiment of the present invention, the positive electrode active material is a material that may cause an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel cobalt manganese composite oxide represented by $Li_a[Ni_bCo_cMn_dM^1_{1-(b+c+d)}]O_2$ ($M^1$ is at least one element selected from the group consisting of sodium (Na), potassium (K), magnesium (Mg), aluminum (Al), iron (Fe), chromium (Cr), yttrium (Y), tin (Sn), titanium (Ti), boron (B), phosphorus (P), zirconium (Zr), ruthenium (Ru), niobium (Nb), tungsten (W), barium (Ba), strontium (Sr), lanthanum (La), gallium (Ga), Mg, gadolinium (Gd), samarium (Sm), calcium (Ca), cerium (Ce), fluorine (F), tantalum (Ta), molybdenum (Mo), scandium (Sc), vanadium (V), zinc (Zn), Nb, copper (Cu), indium (In), sulfur (S), boron (B), and bismuth (Bi), and $0.9 \le a \le 1.1$, $0.6 \le b < 1$, $0 < c < 0.4$, $0 < d < 0.4$, $0.6 < b+c+d \le 1$); a lithium nickel-based oxide represented by $Li[Ni_{1-y}M^2_y]O_2$ (where, $M^2$ is at least one selected from cobalt (Co), manganese (Mn), Al, Cu, Fe, Mg, B, Cr, Zn, and Ga, and $0.01 \le y \le 0.7$); and an olivine-based lithium metal phosphate represented by $Li_{1+x}[M^3_{1-q}M^4_q]PO_{4-r}X_r$ (where, $M^3$ is at least one selected from the group consisting of Fe, Mn, Co, and nickel (Ni), $M^4$ is at least one selected from the group consisting of Al, Mg, and Ti, X is at least one selected from the group consisting of F, S, and nitrogen (N), and $-0.5 \le x \le 0.5$, $0 \le q \le 0.5$, and $0 \le r \le 0.1$).

Also, the positive electrode may include a lithium nickel cobalt manganese composite oxide as a positive electrode active material, and the positive electrode active material may specifically include a lithium transition metal oxide containing 60 mol% or more of Ni among total metals excluding lithium.

Furthermore, in an embodiment of the present invention, the positive electrode may include a lithium transition metal oxide having a composition represented by Formula 1 below as a positive electrode active material.

$$[Formula\ 1] \qquad Li_a[Ni_bCo_cMn_dM^1_{1-(b+c+d)}]O_2$$

$M^1$ is at least one element selected from the group consisting of Na, K, Mg, Al, Fe, Cr, Y, Sn, Ti, B, P, Zr, Ru, Nb, W, Ba, Sr, La, Ga, Mg, Gd, Sm, Ca, Ce, F, Ta, Mo, Sc, V, Zn, Nb, Cu, In, S, B, and Bi, and $0.9 \le a \le 1.1$, $0.6 \le b < 1$, $0 < c < 0.4$, $0 < d < 0.4$, and $0.6 < b+c+d \le 1$.

Also, in Formula 1, $0.9 \le a \le 1.1$, $0.8 \le b < 1$, $0 < c < 0.2$, $0 < d < 0.2$, and $0.8 < b+c+d \le 1$.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, heat-treated carbon, or aluminum or stainless steel that is surface-treated with one of carbon, nickel, titanium, silver, or the like may be used. Also, the positive electrode collector may typically have a thickness of 3 μm to 500 μm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

**EP 4 765 307 A1**

The positive electrode may be prepared by a conventional method known in the art. For example, after a slurry is prepared by mixing and stirring a solvent as well as a binder, a conductive agent, and a dispersant, if necessary, into the positive electrode active material, the slurry is applied (coated) onto a current collector formed of a metallic material, compressed, and then dried to prepare a positive electrode.

In this case, the positive electrode active material may be included in an amount of 80 wt% to 99 wt%, more specifically, 90 wt% to 98 wt% based on a total weight of the positive electrode active material layer.

The conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, particularly 0.1 wt% to 9 wt%, and more particularly 0.1 wt% to 5 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

The negative electrode includes a negative electrode collector and a negative electrode active material layer disposed on the negative electrode collector.

The negative electrode collector is not particularly limited as long as it has high conductivity without causing chemical changes in the battery, and, for example, copper, stainless steel, aluminum, nickel, titanium, heat-treated carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500um, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), Al, Sn, lead (Pb), Zn, Bi, In, Mg, Ga, cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt%, 82 wt% to 99 wt%, or 84 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 1 wt% to 30 wt%, 1 wt% to 20 wt%, or 1 wt% to 10 wt% based on the total weight of the negative electrode active material layer. The conductive agent is not particularly limited as long as it has conductivity without causing chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

Thus, according to another embodiment of the present invention, a battery module including a plurality of the lithium secondary batteries and a battery pack including a plurality of the battery modules are provided.

The battery module refers to a battery assembly in which a predetermined number of the lithium secondary batteries is bundled together and placed in a frame to protect them from external impacts, heat, and vibrations. The battery pack refers to a final form of a battery system installed in electric vehicles and the like.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Since the battery module and battery pack including the lithium secondary battery according to the present invention have excellent resistance to external heat and maximize safety by thermal propagation in case of an actual fire, high-capacity and large-area batteries may be achieved.

Also, the present invention provides a method of evaluating thermal safety of a cylindrical type lithium secondary battery.

The method of evaluating thermal safety of a cylindrical type lithium secondary battery of the present invention includes the steps of: (s1) measuring a diameter and a height of the lithium secondary battery; (s2) measuring an amount of ethylene carbonate (EC) remaining in the lithium secondary battery; (s3) measuring a reaction area of a negative electrode active material layer of a negative electrode included in the lithium secondary battery; and (s4) determining that the lithium secondary battery has thermal safety when Equation 1 below is satisfied.

[Equation 1]

$$\frac{R}{H} \times \frac{dEC}{AA \times LA \times RA \times BA} \times 100 \geq 5.00$$

In Equation 1, R is the diameter (mm) of the battery, H is the height (mm) of the battery, dEC is the amount (g) of the ethylene carbonate remaining in the lithium secondary battery after formation, AA is an area ($cm^2$) of the negative electrode, LA is a loading amount ($g/cm^2$) of the negative electrode, RA is a ratio of a negative electrode active material, BA is BET specific surface area ($m^2/g$) of the negative electrode active material, and the reaction area of the negative active material layer is calculated as $AA \times LA \times RA \times BA$, wherein R is in a range of 45 to 47, and H is in a range of 78 to 130.

In an embodiment of the present invention, the method of evaluating thermal safety of a cylindrical type lithium secondary battery may be applied to a cylindrical type lithium secondary battery with a predetermined specification. A diameter of the cylindrical type lithium secondary battery may be in a range of 45 mm to 47 mm, the diameter may specifically be in a range of 45.5 mm to 46.5 mm, and the diameter may more specifically be 46 mm.

Also, a height of the cylindrical type lithium secondary battery may be in a range of 78 mm to 130 mm, and the height may specifically be in a range of 79.0 mm to 126.0 mm, 79.0 mm to 121.0 mm, 79.0 mm to 82.0 mm, 94.0 mm to 96.0 mm, 119.0 mm to 121.0 mm, or 124.0 mm to 126.0 mm, and may more specifically be in a range of 79.5 mm to 80.5 mm, 94.5 mm to 95.5 mm, 119.5 mm to 120.5 mm, or 124.5 mm to 125.5 mm. Specifically, the method of evaluating thermal safety of a cylindrical type lithium secondary battery may be applied to a 4680 lithium secondary battery, a 4695 lithium secondary battery, a 46120 lithium secondary battery, or a 46125 lithium secondary battery.

Since whether or not a cylindrical type lithium secondary battery to be evaluated satisfies Equations 1 and 2 is confirmed by using the method of evaluating thermal safety of a cylindrical type lithium secondary battery, it is possible to determine whether the cylindrical type lithium secondary battery to be evaluated has an appropriate level of thermal safety.

In order to improve the life characteristics of the battery, suppress the reduction in battery capacity, and improve the discharge capacity of the battery, the electrolyte may further include an additive in addition to the above electrolyte components. As the additive, at least one additive, for example, a halo-alkylene carbonate-based compound such as difluoroethylene carbonate, pyridine, triethylphosphite, triethanolamine, cyclic ether, ethylene diamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included. In this case, the additive may be included in an amount of 0.1 part by weight to 5 parts by weight based on 100 parts by weight of the total weight of the electrolyte.

Hereinafter, the present invention will be described in more detail, according to specific examples.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Example 1

A negative electrode slurry, which was prepared by mixing a negative electrode active material, in which natural graphite having a specific surface area of 2.1 $m^2$/g and artificial graphite having a specific surface area of 0.7 $m^2$/g were mixed in a ratio of 5:5, a conductive agent, an additive, and a binder in a weight ratio of 97.0:1.0:1.0:1.0 in an NMP solvent, was applied onto one surface of a copper current collector, dried, and then rolled to prepare a negative electrode. An area of the negative electrode was set to 2855.3 $cm^2$, and a loading amount of the negative electrode was set to 0.01468 g/$cm^2$.

A positive electrode slurry was prepared by mixing a positive electrode active material (NCM65 1520), a conductive agent (Li-435), and a PVDF binder (KF9700, AD-c01) in a weight ratio of 96.5:1.5:2.0 in N-methylpyrrolidone.

The above-prepared positive electrode slurry was applied onto one surface of an electrode collector, dried at 140°C, and then rolled to prepare a positive electrode.

After an electrode assembly was prepared by disposing a separator between the positive electrode and negative electrode prepared by the above-described method and was then placed inside a 4680 cylindrical battery case (diameter 46 mm, height 80 mm), an electrolyte solution was injected into the case to prepare a battery cell. The electrolyte solution was prepared by dissolving 0.7 M $LiPF_6$ in a mixed organic solvent in which ethylene carbonate (EC):propylene carbonate (PC):ethyl methyl carbonate (EMC) were mixed in a volume ratio of 2:1:7.

The battery cell was charged at a constant current (CC) of 0.2 C to a state of charge (SOC) of 60% at 24°C, and then stored at 60°C for one day. Thereafter, the battery cell was charged at a constant current (CC) of 0.2 C to 4.2 V at 24°C, and then charged at a constant voltage (CV) of 4.2 V to perform first charge until the charge current became 0.05 C (cut-off current). Thereafter, the battery cell was left standing for 20 minutes and then discharged at a constant current of 0.2 C to perform first discharge, and thus, a formation process was completed to complete a 4680 lithium secondary battery.

### Examples 2 to 4

Battery cells were prepared in the same manner as in Example 1 except that an amount of the electrolyte solution injected was gradually increased in Examples 2, 3, and 4, and a formation process was completed to complete 4680 lithium secondary batteries.

### Example 5

A battery cell was prepared in the same manner as in Example 1 except that an area of the negative electrode was set to 2841.3 $cm^2$, a loading amount of the negative electrode was set to 0.01512 g/$cm^2$, and an amount of the electrolyte solution injected was the same as that of Example 4, and a formation process was completed to complete a 4680 lithium secondary battery.

### Example 6

An electrode assembly was prepared in the same manner as in Example 1 except that an area of the negative electrode was set to 6102.8275 cm$^2$ and a loading amount of the negative electrode was set to 0.00644 g/cm$^2$. After the prepared electrode assembly was placed inside a 4695 cylindrical battery case (diameter 46 mm, height 95 mm), an electrolyte solution was injected to complete a formation process, and thus, a 4695 lithium secondary battery was completed.

**Example 7**

An electrode assembly was prepared in the same manner as in Example 1 except that an area of the negative electrode was set to 5557.5 cm$^2$ and a loading amount of the negative electrode was set to 0.00644 g/cm$^2$. After the prepared electrode assembly was placed inside a 4695 cylindrical battery case (diameter 46 mm, height 95 mm), an electrolyte solution was injected to complete a formation process, and thus, a 4695 lithium secondary battery was completed.

**Comparative Examples 1 and 2**

Battery cells were prepared in the same manner as in Example 1 except that an amount of each electrolyte solution injected was decreased in comparison to that of Example 1, and a formation process was completed to complete 4680 lithium secondary batteries. An amount of the electrolyte solution decreased in Comparative Example 1 was increased in comparison to that in Comparative Example 2.

**Comparative Example 3**

A battery cell was prepared in the same manner as in Example 1 except that an area of the negative electrode was set to 2841.3 cm$^2$ and a loading amount of the negative electrode was set to 0.01512 g/cm$^2$, and a formation process was completed to complete a 4680 lithium secondary battery.

**Reference Example 1**

A 2170 lithium secondary battery was completed by completing a formation process in the same manner as in Example 1 except that an area of the negative electrode was set to 58.6148 cm$^2$, a loading amount of the negative electrode was set to 0.0132 g/cm$^2$, and a battery cell was prepared by placing an electrode assembly inside a 2170 battery case (diameter 21 mm, height 70 mm) and then injecting an electrolyte solution into the case.

**Reference Example 2**

A 2170 lithium secondary battery was prepared in the same manner as in Reference Example 1 except that an amount of the electrolyte solution injected was decreased in comparison to that of Reference Example 1.

**Experimental Examples**

(1) Measurement of Amount of Remaining Ethylene Carbonate

A portion of the battery case of each of the 4680 lithium secondary batteries, 4695 lithium secondary batteries, or 2170 lithium secondary batteries, which were prepared in Examples 1 to 7, Comparative Examples 1 to 3, and Reference Examples 1 and 2, was cut open to collect each electrolyte solution included in the lithium secondary battery case.
An amount of ethylene carbonate remaining in the electrolyte solution was measured using a 500 MHz 1H, 470 MHz 19F NMR by Varian, Inc. with $^1$H and $^{19}$F as target nuclei as described in the literature (KR 10-2362162 B1).

(2) Calculation of Value of Equation 1

Whether or not a value of Equation 1 below was satisfied was calculated for each of the 4680 lithium secondary batteries, 4695 lithium secondary batteries, or 2170 lithium secondary batteries which were prepared in Examples 1 to 7, Comparative Examples 1 to 3, and Reference Examples 1 and 2.

[Equation 1]

$$\frac{R}{H} \times \frac{dEC}{AA \times LA \times RA \times BA} \times 100 \geq 5.00$$

In Equation 1, R is the diameter (mm) of the battery, H is the height (mm) of the battery, dEC is the amount (g) of the ethylene carbonate remaining in the lithium secondary battery after formation, AA is the area ($cm^2$) of the negative electrode, LA is the loading amount ($g/cm^2$) of the negative electrode, RA is a ratio of a negative electrode active material, and BA is BET specific surface area ($m^2/g$) of the negative electrode active material.

(3) High-Temperature Safety Evaluation

Each of the 4680 lithium secondary batteries, 4695 lithium secondary batteries, or 2170 lithium secondary batteries, which were prepared in Examples 1 to 7, Comparative Examples 1 to 3, and Reference Examples 1 and 2, was charged at a constant current (CC) of 0.2 C to 4.2 V at 24°C, and then charged at a constant voltage (CV) of 4.2 V to perform charge until the charge current became 0.05 C (cut-off current).

Each of the 4680 lithium secondary batteries, 4695 lithium secondary batteries, or 2170 lithium secondary batteries, which were prepared in Examples 1 to 7, Comparative Examples 1 to 3, and Reference Examples 1 and 2, was placed in a hot box at room temperature (25°C) and the temperature was increased at a heating rate of 5°C/min. When the temperature of the hot box reached 130°C, the temperature of the hot box was maintained at 130°C. The temperature of 130°C was maintained for 30 minutes, and thereafter, heating for maintaining the temperature of the hot box was stopped.

After maintaining the temperature at 130°C for 30 minutes, if ignition occurred in the lithium secondary battery, it was evaluated as fail, and if no ignition occurred, it was evaluated as pass.

[Table 1]

| | R (mm) | h (mm) | dEC (g) | AA ($cm^2$) | LA ($g/cm^2$) | RA | | BA ($m^2/g$) | |
|---|---|---|---|---|---|---|---|---|---|
| | | | | | | Artif icial graph ite | Natur al graph ite | Arti fici al grap hite | Natu ral grap hite |
| Example 1 | 46 | 80 | 4.95 | 2855.3 | 0.01468 | 0.485 | 0.485 | 0.7 | 2.1 |
| Example 2 | 46 | 80 | 5.30 | 2855.3 | 0.01468 | 0.485 | 0.485 | 0. | 2.1 |
| Example 3 | 46 | 80 | 5.52 | 2855.3 | 0.01468 | 0.485 | 0.485 | 0.7 | 2.1 |
| Example 4 | 46 | 80 | 5.83 | 2855.3 | 0.01468 | 0.485 | 0.485 | 0.7 | 2.1 |
| Example 5 | 46 | 80 | 5.83 | 2841.3 | 0.01512 | 0.485 | 0.485 | 0.7 | 2.1 |
| Example 6 | 46 | 95 | 6.11 | 6102.8 3 | 0.00644 | 0.485 | 0.485 | 0.7 | 2.1 |
| Example 7 | 46 | 95 | 5.82 | 5557.5 | 0.00644 | 0.485 | 0.485 | 0.7 | 2.1 |
| Comparative Example 1 | 46 | 80 | 4.64 | 2855.3 | 0.01468 | 0.485 | 0.485 | 0.7 | 2.1 |
| Comparative Example 2 | 46 | 80 | 4.78 | 2855.3 | 0.01468 | 0.485 | 0.485 | 0.7 | 2.1 |
| Comparative Example 3 | 46 | 80 | 4.95 | 2841.3 | 0.01512 | 0.485 | 0.485 | 0.7 | 2.1 |
| Reference Example 1 | 21 | 70 | 1.29 7 | 58.615 | 0.01320 | 0.485 | 0.485 | 0.7 | 2.1 |
| Reference Example 2 | 21 | 70 | 1.15 8 | 58.615 | 0.01320 | 0.485 | 0.485 | 0.7 | 2.1 |

[Table 2]

| | R/h | dEC (g) | Reaction area (m$^2$) | | | Value of Equation 1 (≥5.00) | Hot box result |
|---|---|---|---|---|---|---|---|
| | | | Artifici al graphite | Natural graphite | Sum | | |
| Example 1 | 0.575 | 4.95 | 14.23042 | 42.69125 | 56.92166 | 5.00 | Pass |
| Example 2 | 0.575 | 5.30 | 14.23042 | 42.69125 | 56.92166 | 5.35 | Pass |
| Example 3 | 0.575 | 5.52 | 14.23042 | 42.69125 | 56.92166 | 5.58 | Pass |
| Example 4 | 0.575 | 5.83 | 14.23042 | 42.69125 | 56.92166 | 5.89 | Pass |
| Example 5 | 0.575 | 5.83 | 14.58507 | 43.75522 | 58.34030 | 5.75 | Pass |
| Example 6 | 0.484 | 6.11 | 13.34310 | 40.02930 | 53.37240 | 5.54 | Pass |
| Example 7 | 0.484 | 5.82 | 12.15081 | 36.45242 | 48.60323 | 5.80 | Pass |
| Comparative Example 1 | 0.575 | 4.64 | 14.23042 | 42.69125 | 56.92166 | 4.69 | Fail |
| Comparative Example 2 | 0.575 | 4.78 | 14.23042 | 42.69125 | 56.92166 | 4.83 | Fail |
| Comparative Example 3 | 0.575 | 4.95 | 14.58507 | 43.75522 | 58.34030 | 4.88 | Fail |
| Reference Example 1 | 0.3 | 1.30 | 0.262676 | 0.788029 | 1.050705 | 37.03 | - |
| Reference Example 2 | 0.3 | 1.16 | 0.262676 | 0.788029 | 1.050705 | 33.06 | - |

First, referring to Reference Examples 1 and 2 in Tables 1 and 2, they were for 2170 lithium secondary batteries, wherein it may be understood that values of Equation 1 were very large, at 37.03 and 33.06. With respect to the 2170 lithium secondary battery, since Equation 1 may be satisfied even when the dEC value was very small, it may be confirmed that Equation 1 may be appropriately applied to a lithium secondary battery with a predetermined specification.

Referring to Tables 1 and 2, Examples 1 to 7 satisfied the value of Equation 1, wherein since they were evaluated as pass in the hot box test, it may be confirmed that they had excellent safety when high temperature was applied from outside the battery. In contrast, Comparative Examples 1 to 3 did not satisfy the value of Equation 1, wherein since they were evaluated as fail in the hot box test, it may be confirmed that safety was poor when high temperature was applied from outside the battery.

With respect to Comparative Examples 1 and 2, the amount of the electrolyte solution injected was smaller than those of Examples 1 to 4, wherein the dEC value, which was the amount (g) of the ethylene carbonate remaining in the lithium secondary battery after formation, was also small according to the smaller amount of the electrolyte solution injected. As a result, with respect to Comparative Examples 1 and 2, the amount of the ethylene carbonate remaining in the lithium secondary battery after formation was relatively smaller than the reaction area of the negative electrode active material layer which was calculated as AA×LA×RA×BA, and Equation 1 may not be satisfied, and thus, it may be confirmed that Comparative Examples 1 and 2, which did not satisfy Equation 1, had poor high-temperature safety.

Comparative Example 3 is an example in which the area of the negative electrode was relatively smaller because the loading amount of the negative electrode was relatively larger than Example 1, but the reaction area of the negative electrode active material layer, which was calculated as AA×LA×RA×BA, was larger. With respect to Comparative Example 3 and Example 1, since the same amount of the electrolyte solution was injected, the dEC value, which was the amount (g) of the ethylene carbonate remaining in the lithium secondary battery after formation, was the same, but unlike Example 1 satisfying Equation 1, Comparative Example 3 did not satisfy Equation 1 because the reaction area of the negative electrode active material layer was relatively large. Referring to Table 2, Example 1 satisfying Equation 1 was evaluated as Pass in the hot box test, but Comparative Example 1, which did not satisfy Equation 1, was evaluated as Fail in the hot box test. That is, Example 1 and Comparative Example 3, as the 4680 lithium secondary batteries of the same specifications, included the same amount of the ethylene carbonate remaining in the lithium secondary battery, but since a relative ratio between the remaining ethylene carbonate and the reaction area of the negative electrode active material layer was different due to a difference in the reaction area of the negative electrode active material layer, it may be confirmed that there was a difference in high-temperature safety.

**Claims**

1. A lithium secondary battery comprising:

an electrode assembly including a positive electrode, a negative electrode, and a separator disposed between the positive electrode and the negative electrode;
an electrolyte including ethylene carbonate as a solvent; and
a cylindrical battery case accommodating the electrode assembly and the electrolyte,
wherein the lithium secondary battery satisfies Equation 1:

[Equation 1]

$$\frac{R}{H} \times \frac{dEC}{AA \times LA \times RA \times BA} \times 100 \geq 5.00$$

wherein, in Equation 1, R is a diameter (mm) of the battery, H is a height (mm) of the battery, dEC is an amount (g) of the ethylene carbonate remaining in the lithium secondary battery after formation, AA is an area ($cm^2$) of the negative electrode, LA is a loading amount ($g/cm^2$) of the negative electrode, RA is a ratio of a negative electrode active material, and BA is Brunauer-Emmett-Teller (BET) ($m^2/g$) of the negative electrode active material, wherein R is in a range of 45 to 47, and H is in a range of 78 to 130.

2. The lithium secondary battery of claim 1, wherein R and H are a diameter and a height of a 4680 lithium secondary battery, a 4695 lithium secondary battery, a 46120 lithium secondary battery, or a 46125 lithium secondary battery, respectively.

3. The lithium secondary battery of claim 1, wherein dEC is in a range of 2.0 to 10.0.

4. The lithium secondary battery of claim 1, wherein AA is in a range of 2,800 to 2,900.

5. The lithium secondary battery of claim 1, wherein LA is in a range of 0.1000 to 0.2000.

6. The lithium secondary battery of claim 1, wherein RA is in a range of 0.80 to 0.99.

7. The lithium secondary battery of claim 1, wherein BA is in a range of 0.01 to 100.

8. The lithium secondary battery of claim 1, wherein the electrolyte further comprises an organic solvent other than the ethylene carbonate,
wherein the organic solvent comprises at least one selected from the group consisting of an ester-based solvent, an ether-based solvent, a ketone-based solvent, an aromatic hydrocarbon-based solvent, a carbonate-based solvent other than the ethylene carbonate, an alcohol-based solvent, nitriles, amides, dioxolanes, and sulfolanes.

9. The lithium secondary battery of claim 1, wherein the electrolyte further comprises an electrolyte additive,
wherein the electrolyte additive comprises at least one selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

10. The lithium secondary battery of claim 1, wherein the positive electrode comprises a positive electrode active material, wherein the positive electrode active material comprises a lithium transition metal oxide containing 60 mol% or more of nickel (Ni) among total metals excluding lithium.

11. A method of evaluating thermal safety of a cylindrical type lithium secondary battery, the method comprising the steps of:

(s1) measuring a diameter and a height of the lithium secondary battery;
(s2) measuring an amount of ethylene carbonate (EC) remaining in the lithium secondary battery after formation;
(s3) measuring a reaction area of a negative electrode active material layer of a negative electrode included in the lithium secondary battery; and
(s4) determining that the lithium secondary battery has thermal safety when Equation 1 is satisfied:

[Equation 1]

$$\frac{R}{H} \times \frac{dEC}{AA \times LA \times RA \times BA} \times 100 \geq 5.00$$

wherein, in Equation 1, R is the diameter (mm) of the battery, H is the height (mm) of the battery, dEC is the amount (g) of the ethylene carbonate remaining in the lithium secondary battery after formation, AA is an area ($cm^2$) of the negative electrode, LA is a loading amount ($g/cm^2$) of the negative electrode, RA is a ratio of a negative electrode active material, BA is Brunauer-Emmett-Teller (BET) specific surface area ($m^2/g$) of the negative electrode active material, and the reaction area of the negative active material layer is calculated as $AA \times LA \times RA \times BA$, wherein R is in a range of 45 to 47, and H is in a range of 78 to 130.

12. The method of claim 11, wherein R and H are a diameter and a height of a 4680 lithium secondary battery, a 4695 lithium secondary battery, a 46120 lithium secondary battery, or a 46125 lithium secondary battery, respectively.

## INTERNATIONAL SEARCH REPORT

| International application No. |
|---|
| **PCT/KR2024/020977** |

### A.    CLASSIFICATION OF SUBJECT MATTER

**H01M 10/42**(2006.01)i; **H01M 10/052**(2010.01)i; **H01M 10/0568**(2010.01)i; **H01M 10/0569**(2010.01)i

According to International Patent Classification (IPC) or to both national classification and IPC

### B.    FIELDS SEARCHED

Minimum documentation searched (classification system followed by classification symbols)

H01M 10/42(2006.01); G01R 31/02(2006.01); G01R 31/36(2006.01); H01M 10/04(2006.01); H01M 10/052(2010.01); H01M 10/0569(2010.01); H01M 10/48(2006.01); H01M 2/12(2006.01); H01M 2/34(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 원통형 전지 (cylindrical battery), 평가 (estimate), 열 안전성 (thermal safety)

### C.    DOCUMENTS CONSIDERED TO BE RELEVANT

| Category* | Citation of document, with indication, where appropriate, of the relevant passages | Relevant to claim No. |
|---|---|---|
| A | KR 10-2011-0017835 A (LG CHEM, LTD.) 22 February 2011 (2011-02-22)<br>See abstract; claim 1; and paragraph [0066]. | 1-12 |
| A | KR 10-2013-0003884 A (LG CHEM, LTD.) 09 January 2013 (2013-01-09)<br>See abstract; and claim 1. | 1-12 |
| A | KR 10-2008-0073652 A (MATSUSHITA ELECTRIC INDUSTRIAL CO., LTD.) 11 August 2008 (2008-08-11)<br>See abstract; and claim 1. | 1-12 |
| A | JP 2019-057382 A (TOSHIBA CORP.) 11 April 2019 (2019-04-11)<br>See abstract; and claim 1. | 1-12 |
| A | JP 5656884 B2 (MITSUBISHI ELECTRIC CORP.) 21 January 2015 (2015-01-21)<br>See claim 1. | 1-12 |

☐ Further documents are listed in the continuation of Box C.    ☑ See patent family annex.

| | |
|---|---|
| \*    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **26 March 2025** | **26 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020977**

| Patent document cited in search report | | | Publication date (day/month/year) | Patent family member(s) | | | Publication date (day/month/year) |
|---|---|---|---|---|---|---|---|
| KR | 10-2011-0017835 | A | 22 February 2011 | CN | 102473883 | A | 23 May 2012 |
| | | | | CN | 102473883 | B | 08 April 2015 |
| | | | | EP | 2466668 | A2 | 20 June 2012 |
| | | | | EP | 2466668 | B1 | 22 October 2014 |
| | | | | JP | 2013-502035 | A | 17 January 2013 |
| | | | | JP | 5577405 | B2 | 20 August 2014 |
| | | | | KR | 10-1058386 | B1 | 22 August 2011 |
| | | | | US | 2012-0114979 | A1 | 10 May 2012 |
| | | | | US | 9112234 | B2 | 18 August 2015 |
| | | | | WO | 2011-019237 | A2 | 17 February 2011 |
| | | | | WO | 2011-019237 | A3 | 28 April 2011 |
| KR | 10-2013-0003884 | A | 09 January 2013 | KR | 10-1277732 | B1 | 24 June 2013 |
| KR | 10-2008-0073652 | A | 11 August 2008 | CN | 101276943 | A | 01 October 2008 |
| | | | | CN | 101276943 | B | 02 June 2010 |
| | | | | JP | 2008-192495 | A | 21 August 2008 |
| | | | | KR | 10-1023352 | B1 | 18 March 2011 |
| | | | | US | 2008-0186030 | A1 | 07 August 2008 |
| | | | | US | 8081000 | B2 | 20 December 2011 |
| JP | 2019-057382 | A | 11 April 2019 | JP | 6982445 | B2 | 17 December 2021 |
| | | | | US | 10938075 | B2 | 02 March 2021 |
| | | | | US | 2019-0198938 | A1 | 27 June 2019 |
| | | | | WO | 2019-058583 | A1 | 28 March 2019 |
| JP | 5656884 | B2 | 21 January 2015 | JP | 2013-149379 | A | 01 August 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102362162 B1